# EUROPEAN PATENT APPLICATION

(11) **EP 4 711 749 A1**
(43) Date of publication of application: **18.03.2026**
(21) Application number: 24823683.8
(22) Date of filing: 12.06.2024
(51) Int. Cl.: G01N 23/20058, G01N 23/203, G01N 23/2251

(54) **APPARATUS AND METHOD FOR ANALYZING CRYSTAL STRUCTURE**

(30) Priority: 13.06.2023 KR 20230075601
(71) Applicant: LG Chem, Ltd., Seoul 07336 (KR)
(72) Inventor: LEE, Sangwon, Daejeon 34122 (KR); KIM, Hoeyeon, Daejeon 34122 (KR); JEONG, Jong Seok, Daejeon 34122 (KR); PARK, Jeseob, Daejeon 34122 (KR)
(74) Representative: Plasseraud IP
(86) International application number: PCT/KR2024/008010
(87) International publication number: WO 2024/258165

(57) **Abstract**

Disclosed is a crystal structure analysis apparatus and method. The crystal structure analysis apparatus includes: an Electron Backscatter Diffraction (EBSD) data acquisition module for acquiring EBSD data for a solid material; an image generation module for generating a shape of the solid material as a first image including a plurality of pixels; a clustering module for performing clustering on the plurality of pixels by using the EBSD data so that the first image includes a plurality of clusters each representing a crystal direction; an image processing module for processing the first image so that the first image is displayed in a different color for each cluster, to generate a second image; and a rendering module for rendering the second image to a display region.

## Description

### [Technical Field]

### CROSS-REFERENCE TO RELATED APPLICATION

This application claims priority to and the benefit of Korean Patent Application No. 10-2023-0075601 filed in the Korean Intellectual Property Office on June 13, 2023, the entire contents of which are incorporated herein by reference.

The present disclosure relates to a crystal structure analysis apparatus and method.

### [Background Art]

Electron Backscatter Diffraction (EBSD) is mounted on a scanning electron microscope and may analyze the orientation of the material by detecting reflected electrons (rear scattering electrons) when accelerated electrons are injected into the sample. In other words, EBSD may analyze the crystal structure in the irradiation region by using the diffraction pattern measured from each crystal. For example, the position of the electron beam may be controlled through a computer system, the pattern generated in the specimen region where the electron beam stays may be recorded through a camera, and crystallographic information in the corresponding specimen region may be calculated by automatically analyzing the recorded pattern.

### [Disclosure]

### [Technical Problem]

The present disclosure attempts to provide a crystal structure analysis apparatus and method that is capable of effectively analyzing a crystal structure of a solid material from Electron Backscatter Diffraction (EBSD) data for the solid material.

### [Technical Solution]

An example embodiment of the present disclosure provides a crystal structure analysis apparatus including: an Electron Backscatter Diffraction (EBSD) data acquisition module for acquiring EBSD data for a solid material; an image generation module for generating a shape of the solid material as a first image including a plurality of pixels; a clustering module for performing clustering on the plurality of pixels by using the EBSD data so that the first image includes a plurality of clusters each representing a crystal direction; an image processing module for processing the first image so that the first image is displayed in a different color for each cluster, to generate a second image; and a rendering module for rendering the second image to a display region.

In some example embodiments, the EBSD data may include a plurality of angle data collected for each predetermined sized crystal unit forming the solid material, and the clustering module may perform clustering on the plurality of pixels by using the plurality of angle data.

In the example embodiment, the first image may include a first pixel and a second pixel, the plurality of angle data may include first angle data corresponding to the first pixel and second angle data corresponding to the second pixel, and the clustering module may group the first pixel and the second pixel into a same first pixel group when a difference value between the first angle data and the second angle data is equal to or less than a predetermined first threshold value.

In the example embodiment, the clustering module may determine the first pixel group as a valid cluster when the number of pixels grouped into the first pixel group is equal to or greater than a second threshold value, and may not determine the first pixel group as a valid cluster when the number of pixels grouped into the first pixel group is less than the second threshold value.

In the example embodiment, the first pixel group may include a third pixel and a fourth pixel, and when a distance value between a position of the third pixel and a position of the fourth pixel is equal to or less than a predetermined third threshold value, the clustering module may group the third pixel and the fourth pixel into the same second pixel group.

In the example embodiment, the clustering module may determine the second pixel group as a valid cluster when the number of pixels grouped into the second pixel group is equal to or greater than the fourth threshold value, and the clustering module may not determine the second pixel group as a valid cluster when the number of pixels grouped into the second pixel group is less than the fourth threshold value.

In the example embodiment, the clustering module may further perform clustering on pixels that are not determined to be the valid cluster.

In the example embodiment, the clustering module may calculate an area of the plurality of clusters and assign a number to each of the plurality of clusters in ascending or descending order according to a size of the area.

In the example embodiment, the rendering module may render the number assigned to each of the plurality of clusters onto the second image.

In the example embodiment, the color may include at least one of RGB color, HSL color, HSV color, CMYK color, and gray scale color.

In the example embodiment, the display region may include a first display region and a second display region, and the rendering module may render the first image to the first display region, and render the second image to the second display region.

In the example embodiment, the crystal structure analysis apparatus may further include a region removal module for removing a region that does not correspond to an analysis target of the crystal structure for the first image.

In the example embodiment, the region removal module may set a region to be removed from or maintained in the first image from a user input to the first image, and the user input may include a mouse input or a touch input.

In the example embodiment, the region removal module may analyze the first image using a predetermined algorithm and set a region to be removed from or maintained in the first image.

Another example embodiment of the present disclosure provides a crystal structure analysis method including: acquiring Electron Backscatter Diffraction (EBSD) data for a solid material, the EBSD data including a plurality of angle data collected for each predetermined size of crystal unit forming the solid material; generating a shape of the solid material as a first image including a plurality of pixels; performing clustering on the plurality of pixels by using the EBSD data so that the first image includes a plurality of clusters each representing a crystal direction; processing the first image so that the first image is displayed in a different color for each cluster, to generate a second image; and rendering the second image to a display region.

In the example embodiment, the first image may include a first pixel and a second pixel, the plurality of angle data may include first angle data corresponding to the first pixel and second angle data corresponding to the second pixel, and the performing of the clustering may include grouping the first pixel and the second pixel into a same first pixel group when a difference value between the first angle data and the second angle data is equal to or less than a predetermined first threshold value.

In the example embodiment, the performing of the clustering may further include determining the first pixel group as a valid cluster when the number of pixels grouped into the first pixel group is equal to or greater than a second threshold value, and not determining the first pixel group as a valid cluster when the number of pixels grouped into the first pixel group is less than the second threshold value.

In the example embodiment, the first pixel group may include a third pixel and a fourth pixel, and the performing of the clustering may further include grouping the third pixel and the fourth pixel into the same second pixel group when a distance value between a position of the third pixel and a position of the fourth pixel is equal to or less than a predetermined third threshold value.

In the example embodiment, the performing of the clustering may further include determining the second pixel group as a valid cluster when the number of pixels grouped into the second pixel group is equal to or greater than the fourth threshold value, and not determining the second pixel group as a valid cluster when the number of pixels grouped into the second pixel group is less than the fourth threshold value.

Still another example embodiment of the present disclosure provides a computer-readable medium in which a program is recorded, when executed, the program causing a computer including a processor that executes a program or a command stored in a memory or a storage device to: acquire Electron Backscatter Diffraction (EBSD) data for a solid material; generate a shape of the solid material as a first image including a plurality of pixels; perform clustering on the plurality of pixels by using the EBSD data so that the first image includes a plurality of clusters each representing a crystal direction; process the first image so that the first image is displayed in a different color for each cluster to generate a second image; and render the second image to a display region.

### [Advantageous Effects]

According to the example embodiments, it is possible to effectively analyze a crystal structure of a solid material from EBSD data of the solid material by extracting and visualizing information on how the crystal direction is distributed for all particles for the data collected from the EBSD system. In addition, when a user adjusts a parameter value in a state where the crystal structure is visually expressed, a result of the adjustment is immediately reflected, and the connection pattern of the crystal direction from EBSD data given as two-dimensional data may be analyzed quickly in a typical computing environment.

### [Description of the Drawings]

FIG. 1 is a block diagram for illustrating a crystal structure analysis apparatus according to an example embodiment.
FIGS. 2 and 3A to 3C are diagrams for illustrating an operation of the crystal structure analysis apparatus according to the example embodiment.
FIG. 4 is a diagram for illustrating an example of implementation of the crystal structure analysis apparatus according to the example embodiment.
FIG. 5 is a flowchart illustrating a crystal structure analysis method according to an example embodiment.
FIG. 6 is a diagram for illustrating an example of implementation of the crystal structure analysis apparatus according to the example embodiment.
FIG. 7 is a diagram for illustrating an example of implementation of the crystal structure analysis apparatus according to the example embodiment.
FIG. 8 is a block diagram for illustrating a crystal structure analysis apparatus according to an example embodiment.
FIGS. 9 and 10 are diagrams for illustrating an example of implementation of the crystal structure analysis apparatus according to the example embodiment.
FIG. 11 is a diagram illustrating a computing device according to an example embodiment.

### [Mode for Invention]

Hereinafter, the present disclosure will be described more fully hereinafter with reference to the accompanying drawings, in which example embodiments of the invention are shown. As those skilled in the art would realize, the described example embodiments may be modified in various different ways, all without departing from the spirit or scope of the present disclosure. Accordingly, the drawings and description are to be regarded as illustrative in nature and not restrictive. Like reference numerals designate like elements throughout the specification.

Throughout the specification and the claims, unless explicitly described to the contrary, the word "comprise", and variations such as "comprises" or "comprising", will be understood to imply the inclusion of stated elements but not the exclusion of any other elements. Terms including an ordinal number, such as first and second, are used for describing various components, but the components are not limited by the terms. The terms are used only to discriminate one constituent element from another constituent element.

In addition, the terms "... part", "... unit", and "module" described in the specification mean units for processing at least one function and operation and may be implemented by hardware components or software components and combinations thereof.

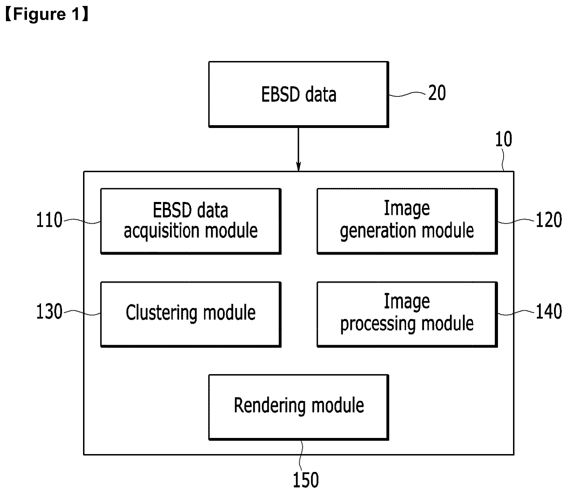

FIG. 1 is a block diagram for illustrating a crystal structure analysis apparatus according to an example embodiment.

Referring to FIG. 1, a crystal structure analysis apparatus 10 according to an example embodiment may analyze a crystal structure of a solid material. The crystal structure analysis apparatus 10 may extract and visualize information on how a crystal direction is distributed with respect to all particles of data collected from an Electron Backscatter Diffraction (EBSD) system. In some example embodiments, the crystal structure analysis apparatus 10 may be a server that serves a web application, which is software executed in a web browser. Accordingly, the crystal structure analysis apparatus 10 may enable users to easily analyze a crystal structure of a solid material by using only a web browser without having to install separate software on their computer. However, the scope of the present disclosure is not limited thereto, and functions provided by the crystal structure analysis apparatus 10 may be implemented as various types of software.

The crystal structure analysis apparatus 10 may include an EBSD data acquisition module 110, an image generation module 120, a clustering module 130, an image processing module 140, and a rendering module 150.

The EBSD data acquisition module 110 may acquire EBSD data 20 for a solid material. EBSD data 20 may include spatially connected crystallographic direction and phase information, and the EBSD data acquisition module 110 may acquire data of various formats collected from an external EBSD system. For example, EBSD data 20 is two-dimensional data distinguished through a separator, such as a comma, and may be a file created to follow a Comma Separated Values (CSV) format. As another example, EBSD data 20 may be in the form of a compressed file consisting of a set of multiple CSV files. As another example, EBSD data 20 may be data that has undergone data cleaning in specific software (e.g., AZtecCrystal) that processes data collected by using EBSD.

The image generation module 120 may generate a shape of a solid material to be analyzed for crystal structure as a first image. Here, the first image may be in the form of a pixel image including a plurality of pixels. For example, the image generation module 120 may generate a first image as a two-dimensional image capable of being displayed on a display device electrically connected to the crystal structure analysis apparatus 10.

The clustering module 130 may perform clustering on a plurality of pixels included in the first image by using the EBSD data acquired by the EBSD data acquisition module 110. In some example embodiments, the clustering module 130 may allow the first image to include a plurality of clusters by using the EBSD data, but each cluster may be formed according to a crystal direction.

For example, the EBSD data may include a plurality of angle data. The plurality of angle data may be a plurality of angle data collected for each crystal unit having a predetermined size forming a solid material to be analyzed. Here, the crystal unit is not determined to be a specific size, but a unit having a predetermined size may be assumed to correspond to at least one included in the first image in consideration of resolution according to an environment in which the crystal structure analysis apparatus according to the example embodiments may display an image. The clustering module 130 may perform clustering on a plurality of pixels representing the first image by using a plurality of angle data.

The image processing module 140 may generate a second image indicating a result of clustering by the clustering module 130. That is, the image processing module 140 may process the first image so that the first image generated by the image generation module 120 is displayed in a different color for each cluster and output the processed first image as a second image. In some example embodiments, the color may include at least one of RGB color, HSL color, HSV color, CMYK color, and gray scale color. RGB color is a color expressed using red, green, and blue, and HSL (or HSB) color may be a color expressed using hue, saturation, and brightness. HSV color is a color expressed using Hue, saturation, and value, and CMYK color may be a color expressed using cyan, magenta, yellow, and black.

The rendering module 150 may render the second image generated by the image processing module 140 on a display region provided in the display device. Accordingly, since it is possible to visualize the crystal direction for the entire particle to enable a user to recognize the crystal direction at a glance by expressing the image in different colors for each cluster, the crystal structure may be effectively analyzed from EBSD data collected in a non-intuitive form.

In some example embodiments, the clustering module 130 may perform clustering based on a first parameter value designated to be adjustable by a user. Here, the first parameter value may represent a threshold value indicating an angle difference based on which the same crystal direction may be determined, and may be identified, for example, by a parameter name of "angle_threshold". The clustering module 130 may group a first pixel and a second pixel into a first pixel group when a difference value between first angle data and second angle data is equal to or less than a predetermined first threshold value. Here, the predetermined first threshold value may correspond to the first parameter value set to be adjustable by a user, the first pixel and the second pixel are pixels constituting the first image, the first angle data may be angle data corresponding to the first pixel among a plurality of angle data of EBSD data, and the second angle data may be angle data corresponding to the second pixel among a plurality of angle data.

Subsequently, the clustering module 130 may determine whether the first pixel group is a valid cluster based on a second parameter value designated to be adjustable by the user. Here, the second parameter value may represent a threshold value indicating the number of pixels having the same crystal direction, which is required to distinguish whether a cluster has been formed, and may be identified, for example, by a parameter name of "angle_min_samples". The clustering module 130 may determine the first pixel group as a valid cluster when the number of pixels grouped into the first pixel group is equal to or greater than the second threshold value, and contrary to this, may not determine the first pixel group as a valid cluster when the number of pixels grouped into the first pixel group is less than the second threshold value. Here, the predetermined second threshold value may correspond to a second parameter value set to be adjustable by a user.

Accordingly, the clustering module 130 may determine only the pixels as a valid cluster only when the number of pixels having a difference in angle data that does not exceed a range determined based on the first threshold value is equal to or greater than the number determined based on the second threshold value. That is, the pixels having angle data exceeding a range determined based on the first threshold value cannot belong to a valid cluster, and even pixels having a difference in angle data that does not exceed a range determined based on the first threshold value cannot belong to a valid cluster when the pixels do not reach the number determined based on the second threshold value. For pixels that do not belong to a valid cluster, clustering may be additionally performed, or sometimes the pixels may be treated as noise.

On the other hand, the clustering module 130 may perform primarily clustering by using the first and second parameter values as described above, and then secondarily perform clustering using third and fourth parameter values to be described later.

Specifically, the clustering module 130 may perform clustering based on a third parameter value designated to be adjustable by a user. Here, the third parameter value may represent a threshold value indicating a distance between pixels that may be determined as a neighboring position, and may be identified, for example, by a parameter name of "pos_eps". As a result of performing the primary clustering, when the first pixel group includes a third pixel and a fourth pixel, the clustering module 130 may group the third pixel and the fourth pixel into a second pixel group when a distance value between the position of the third pixel and the position of the fourth pixel is equal to or less than a predetermined third threshold value. Here, the predetermined third threshold value may correspond to a third parameter value set to be adjustable by a user.

Subsequently, the clustering module 130 may determine whether the second pixel group is a valid cluster based on a fourth parameter value designated to be adjustable by the user. Here, the fourth parameter value may represent a threshold value indicating the number of pixels corresponding to a neighbor, which is required to distinguish whether a cluster is formed, and may be identified, for example, by a parameter name of "pos_min_samples". The clustering module 130 may determine the second pixel group as a valid cluster when the number of pixels grouped into the second pixel group is equal to or greater than the fourth threshold value, and unlike this, the clustering module 30 may not determine the second pixel group as a valid cluster when the number of pixels grouped into the second pixel group is less than the fourth threshold value. Here, the predetermined fourth threshold value may correspond to a fourth parameter value set to be adjustable by a user.

Accordingly, the clustering module 130 may determine only the pixels as a valid cluster only when the number of pixels having a pixel-to-pixel distance that does not exceed a distance determined based on the third threshold value is equal to or greater than the number determined based on the fourth threshold value. That is, pixels having a pixel-to-pixel distance exceeding a distance determined based on the third threshold value cannot belong to a valid cluster, and even pixels having a pixel-to-pixel distance that does not exceed the distance determined based on the third threshold value cannot belong to a valid cluster when the pixels do not reach the number determined based on the fourth threshold value. For pixels that do not belong to a valid cluster, clustering may be additionally performed, or sometimes the pixels may be treated as noise.

In this way, the clustering module 130 may easily change the level of clustering according to the values of the first to fourth parameters that may be designated by the user. Accordingly, it is easy to visually recognize the crystal direction extracted from EBSD data, and it is possible to easily search for a desired crystal direction pattern from the clustering result that is displayed differently as the values of the first to fourth parameters are changed and the crystal direction corresponding to each cluster. For example, a connection pattern in a specific crystal direction that may be formed between clusters adjacent to each other may be used as a meaningful analysis result, and in order to analyze the connection pattern of the crystal direction from the EBSD data given as two-dimensional data, a lot of computing resources are required and considerable work time is required. In contrast, according to the present example embodiment, when only the values of the first to fourth parameters are changed in the state where the crystal direction is visually expressed for each cluster, the result is immediately reflected, so it is possible to search for a connection pattern of the crystal direction in a short time in a general computing environment.

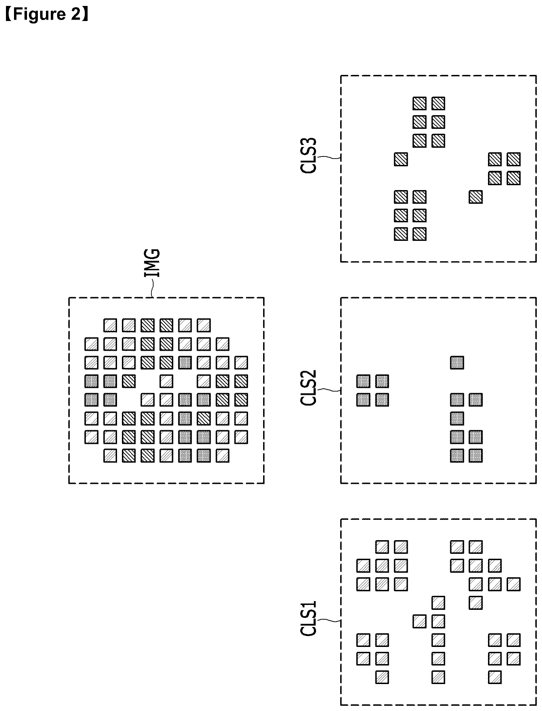

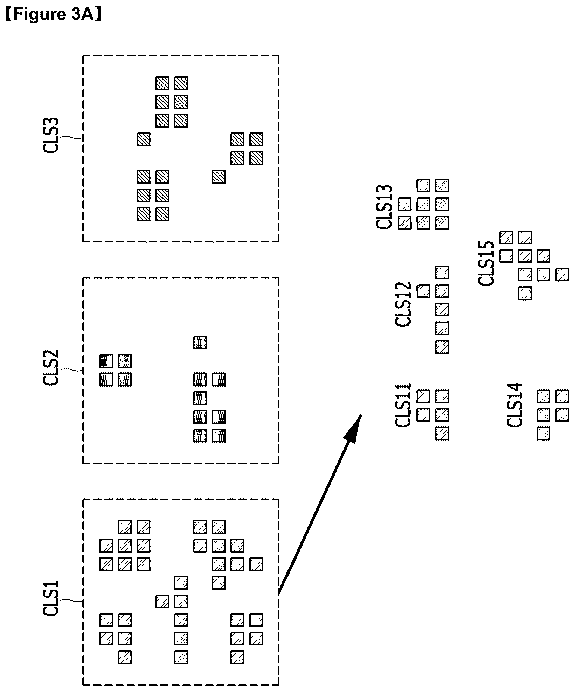

FIGS. 2 and 3A to 3C are diagrams for illustrating an operation of the crystal structure analysis apparatus according to the example embodiment.

Referring to FIG. 2, the clustering module 130 may group pixels having an angle difference based on which the same crystal direction may be determined in the first image IMG into the first pixel group by using a first threshold value corresponding to a first parameter value designated to be adjustable by a user. Subsequently, the clustering module 130 may determine whether the first pixel group is a valid cluster based on a second threshold value corresponding to a second parameter value designated to be adjustable by the user. Accordingly, the clustering module 130 may determine only the pixels as valid clusters CLS1, CLS2, and CLS3 only when the number of pixels having a difference in angle data that does not exceed a range determined based on the first threshold value is equal to or greater than the number determined based on the second threshold value.

In other words, the cluster CLS1 is pixels having a difference in angle data that do not exceed a range determined based on the first threshold value, and is a case in which the pixels are collected by the number determined based on the second threshold value or more, the cluster CLS2 is pixels having a difference in angle data that does not exceed a range determined based on the first threshold value, and is a case in which the pixels are collected by the number determined based on the second threshold value or more and the distribution of angle data does not overlap the distribution of angle data of the cluster CLS1, and the cluster CLS3 is pixels having a difference in angle data that does not exceed a range determined based on the first threshold value, and is a case in which the pixels are collected by the number determined based on the second threshold value or more and the distribution of angle data does not overlap the distribution of angle data of the cluster CLS1 and the cluster CLS2.

Referring to FIG. 3A, the clustering module 130 may treat the cluster CLS1, which is the result of the primary clustering in FIG. 2, as a valid first pixel group by using a second threshold value corresponding to a second parameter value designated to be adjustable by the user, and group the pixels having a pixel-to-pixel distance that may be determined as a neighboring location into the same second pixel group. Subsequently, the clustering module 130 may determine whether the second pixel group is a valid cluster by using a fourth threshold value corresponding to a fourth parameter value designated to be adjustable by a user. Accordingly, the clustering module 130 may determine only the pixels as valid clusters CLS11, CLS12, CLS13, CLS14, and CLS15 only when the number of pixels having a pixel-to-pixel distance that does not exceed a distance determined based on the third threshold value is equal to or greater than the number determined based on the fourth threshold value.

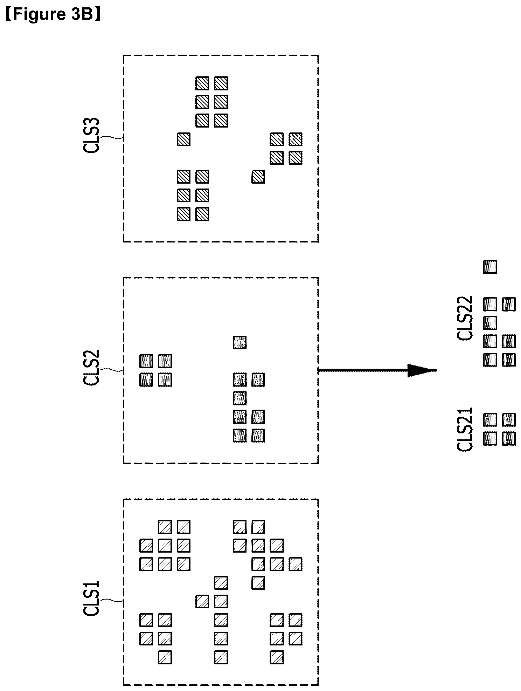

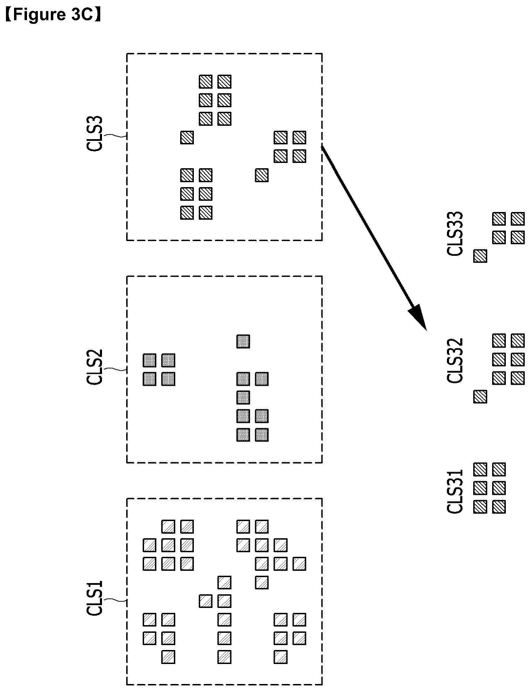

Similarly, referring to FIG. 3B, the clustering module 130 may determine clusters CLS21 and CLS22 from the cluster CLS2 that is the result of the primary clustering in FIG. 2 in a similar manner to the case of FIG. 3A, and referring to FIG. 3C, the clustering module 130 may determine clusters CLS31, CLS32, and CLS33 from the cluster CLS3 that is the result of the primary clustering in FIG. 2 in a similar manner to the case of FIG. 3A.

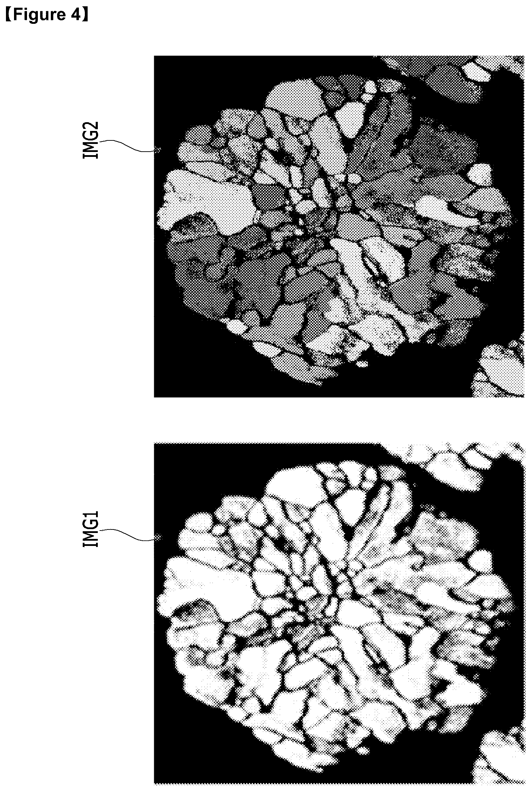

FIG. 4 is a diagram for illustrating an example of implementation of the crystal structure analysis apparatus according to the example embodiment.

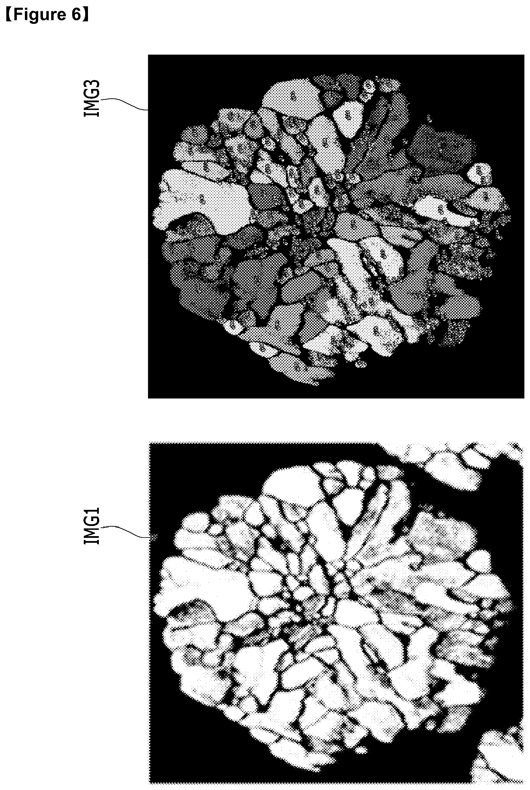

Referring to FIG. 4, the left side is an image IMG1 of a shape of a solid material to be subjected to crystal structure analysis generated by the image generating module 120, and the right side is an image IMG2 in which a value of the angle data is expressed in color based on angle data obtainable from EBSD data obtained by the EBSD data acquisition module 110. Here, the color may be expressed using hue, saturation, and a value based on the Euler angle of the crystal. Thereafter, after clustering is performed by the clustering module 130, a different color may be expressed for each cluster, and a color for classifying one cluster may be determined, for example, by averaging the hue, saturation, and value of all angle data belonging to one cluster. Accordingly, since it is possible to visualize the crystal direction of all the particles to enable a user to recognize the crystal direction at a glance, the crystal structure may be effectively analyzed from EBSD data collected in a non-intuitive form. An example in which different colors are displayed for each cluster after clustering may refer to the image IMG3 of FIG. 6.

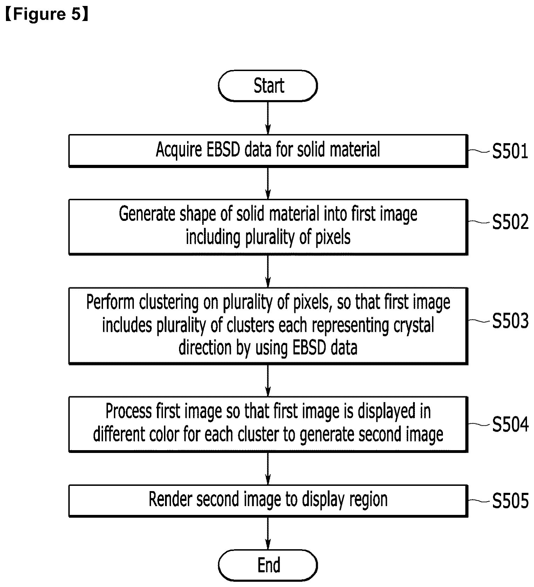

FIG. 5 is a flowchart illustrating a crystal structure analysis method according to an example embodiment.

Referring to FIG. 5, the crystal structure analysis method according to the example embodiment may include acquiring EBSD data for a solid material, including a plurality of angle data collected for each crystal unit of a predetermined size forming the solid material (S501), generating a shape of the solid material into a first image including a plurality of pixels (S502), performing clustering on the plurality of pixels, so that the first image includes a plurality of clusters each representing a crystal direction by using EBSD data (S503), generating a second image by processing the first image so that the first image is displayed in a different color for each cluster (S504), and rendering the second image to a display region (S505).

The detailed description of the method may refer to the foregoing description in connection with FIGS. 1 to 4 and a description to be given later with reference to FIGS. 6 to 10, and thus a redundant description thereof will be omitted.

FIG. 6 is a diagram for illustrating an example of implementation of the crystal structure analysis apparatus according to the example embodiment.

Referring to FIG. 6, in some example embodiments, the clustering module 130 may calculate an area for each of the plurality of clusters and assign numbers to each of the plurality of clusters in ascending or descending order according to the size of the area. Further, the rendering module 150 may render not only the image IMG3 to display different colors for each of the plurality of clusters, but also render the number assigned to each of the plurality of clusters on the image IMG3. The numbers assigned to each cluster may be displayed while overlapping the center of the corresponding cluster, so that a tendency for the crystal direction extracted from the EBSD data may be visually easily recognized.

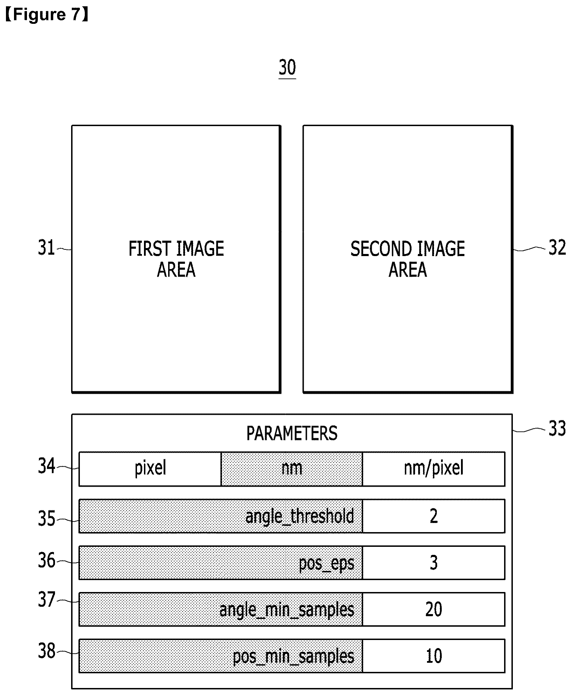

FIG. 7 is a diagram for illustrating an example of implementation of the crystal structure analysis apparatus according to the example embodiment.

Referring to FIG. 7, the rendering module 150 may render the second image generated by the image processing module 140 on a display region 30 provided in the display device. Here, the display region 30 includes a first display region 31 and a second display region 32, and the rendering module 150 may render the first image on the first display region 31 and the second image on the second display region 32. Accordingly, convenience may be provided so that the user may visually compare the entire particles before and after clustering.

Meanwhile, a parameter value adjustment region 33 may be disposed in the display region 30. A parameter value input control 34 for setting an analysis result unit may be displayed in the parameter value adjustment region 33. In addition, the parameter value adjustment region 33 may include parameter value input controls 35 to 38 for allowing a user to adjust the level of clustering performed by the clustering module 130.

Here, the parameter value input control 35 is a control capable of inputting a value of the first parameter identified by the parameter name "angle_threshold", the parameter value input control 36 is a control capable of inputting a value of the third parameter identified by the parameter name "pos_eps", the parameter value input control 37 is a control capable of inputting a value of the second parameter identified by the parameter name "angle_min_samples", and the parameter value input control 38 may be a control capable of inputting a value of the fourth parameter identified by the parameter name "pos_min_samples". More detailed information on the first to fourth parameters may refer to the description with reference to FIG. 1.

By providing the controls to the user, the user may adjust the values of the first to fourth parameters in a timely manner, so that the clustering level of the clustering module 130 may be easily changed at a desired time. Accordingly, it is easy to visually recognize the crystal direction extracted from EBSD data, and it is possible to easily search for a desired crystal direction pattern from the clustering result that is displayed differently as the values of the first to fourth parameters are changed and the crystal direction corresponding to each cluster.

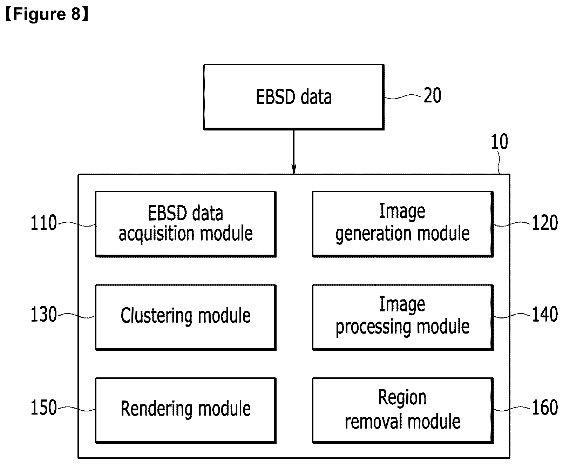

FIG. 8 is a block diagram for illustrating a crystal structure analysis apparatus according to an example embodiment.

Referring to FIG. 8, the crystal structure analysis apparatus 10 according to the example embodiment may include an EBSD data acquisition module 110, an image generation module 120, a clustering module 130, an image processing module 140, a rendering module 150, and a region removal module 160. The EBSD data acquisition module 110, the image generation module 120, the clustering module 130, the image processing module 140, and the rendering module 150 may refer to the descriptions described above with reference to FIGS. 1 to 7.

The region removal module 160 may remove a region that does not correspond to the analysis target of the crystal structure with respect to the first image, so that clustering is not performed on an undesired region when analyzing the crystal structure, thereby preventing unnecessary waste of computing resources.

In some example embodiments, the region removal module 160 may set a region to be removed from or maintained in the first image from a user input of the first image. Here, the user input may include a mouse input or a touch input.

In some example embodiments, the region removal module 160 may analyze the first image by using a predetermined algorithm to be executed on the crystal structure analysis apparatus 10 and set a region to be removed from or maintained in the first image.

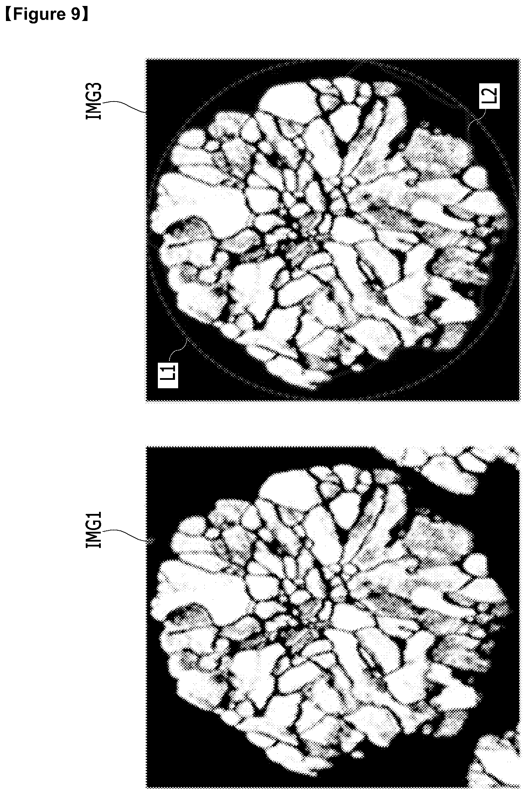

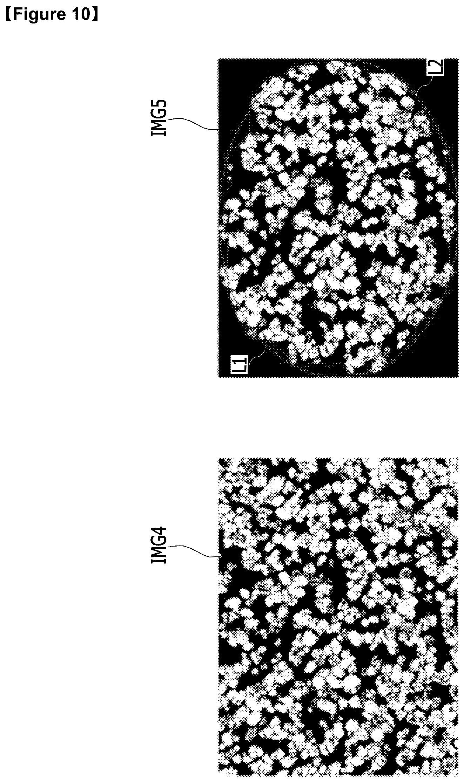

FIGS. 9 and 10 are diagrams for illustrating an example of implementation of the crystal structure analysis apparatus according to the example embodiment.

Referring to FIG. 9, the left side is an image IMG1 of a shape of a solid material to be subjected to crystal structure analysis generated by the image generating module 120, and the right side is an image IMG3 in which a region in which a crystal structure is not analyzed is removed from the image IMG1. In some example embodiments, the region removal module 160 may distinguish a region to be analyzed and a region not to be analyzed by receiving a user input in the form of L1 and set a region to be removed from or maintained in the first image. Alternatively, the region removal module 160 may analyze the first image by using a predetermined algorithm executed so that the result becomes the form of L2, and set a region to be removed from or maintained in the first image. In some example embodiments, two methods may be used in combination, such as a region removal according to a user input through a mouse input or a touch input is attempted first, and then when the attempt fails a predetermined number of times, secondarily, the first image is analyzed by using a predetermined algorithm and a region to be removed from or maintained in the first image is set.

Referring to FIG. 10, the left side is an image IMG4 corresponding to a portion of the image IMG1, and the right side is an image IMG5 in which a region on which crystal structure analysis has not been performed is removed from the image IMG4. As in the case of FIG. 9, in some example embodiments, the region removal module 160 may distinguish a region to be analyzed and a region not to be analyzed by receiving a user input in the form of L1, and a region that is to be removed from or maintained in the first image may be set. Alternatively, the region removal module 160 may analyze the first image by using a predetermined algorithm executed so that the result becomes the form of L2, and set a region to be removed from or maintained in the first image. In some example embodiments, two methods may be used in combination, such as a region removal according to a user input through a mouse input or a touch input is attempted first, and then when the attempt fails a predetermined number of times, secondarily, the first image is analyzed by using a predetermined algorithm and a region to be removed from or maintained in the first image is set.

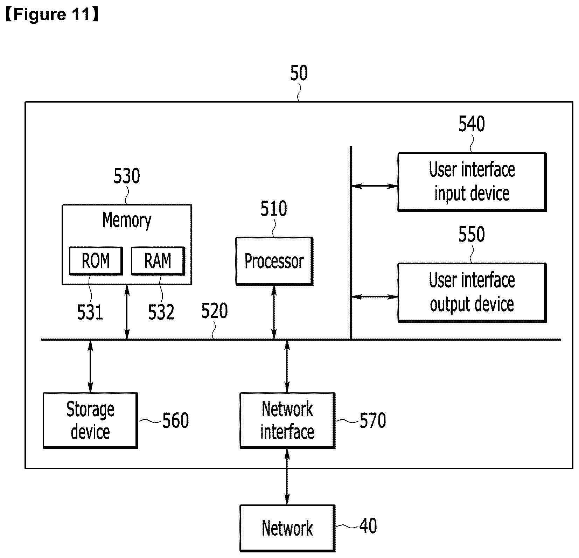

FIG. 11 is a diagram illustrating a computing device according to an example embodiment.

Referring now to FIG. 11, the crystal structure analysis apparatus and method according to the example embodiments may be implemented by using a computing device 50.

The computing device 50 may include at least one of a processor 510, a memory 530, a user interface input device 540, a user interface output device 550, and a storage device 560 communicating via a bus 520. The computing device 50 may also include a network interface 570 electrically connected to the network 40. The network interface 570 may transmit or receive a signal with another entity through the network 40.

The processor 510 may be implemented in various types, such as a micro controller unit (MCU), an Application Processor (AP), a Central Processing Unit (CPU), a Graphic Processing Unit (GPU), a neural processing unit (NPU), and the like, and may be a predetermined semiconductor device executing commands stored in the memory 530 or the storage device 560. The processor 510 may be configured to implement the functions and the methods described above with reference to FIGS. 1 to 10.

The memory 530 and the storage device 560 may include various forms of volatile or non-volatile storage media. For example, the memory may include a read only memory (ROM) 531 and a random access memory (RAM) 532. In the example embodiment, the memory 530 may be located inside or outside the processor 510, and the memory 530 may be connected with the processor 510 through already known various means.

In some example embodiments, at least some configurations or functions of the crystal structure analysis apparatus and method according to the example embodiments may be implemented as programs or software executed on the computing device 50, and the programs or software may be stored on a computer-readable medium.

In some example embodiments, at least some configurations or functions of the crystal structure analysis apparatus and method according to the example embodiments may be implemented using hardware or circuit of the computing device 50, or may be implemented as separate hardware or circuit that may be electrically connected to computing device 50.

According to the example embodiments described above, it is possible to effectively analyze a crystal structure of a solid material from EBSD data for the solid material by extracting and visualizing information on how the crystal direction is distributed for all the particles of the data collected from the EBSD system. In addition, when a user adjusts a parameter value in a state where the crystal structure is visually expressed, a result of the adjustment is immediately reflected, and the connection pattern of the crystal direction from EBSD data given as two-dimensional data may be analyzed quickly in a typical computing environment.

Although the example embodiments of the present disclosure have been described in detail, the scope of the present disclosure is not limited thereto, but also includes various modifications and improvements by one of ordinary skill in the art utilizing the basic concepts of the present disclosure as defined in the following claims.

## Claims

1. A crystal structure analysis apparatus comprising:
an Electron Backscatter Diffraction (EBSD) data acquisition module for acquiring EBSD data for a solid material;
an image generation module for generating a shape of the solid material as a first image including a plurality of pixels;
a clustering module for performing clustering on the plurality of pixels by using the EBSD data so that the first image includes a plurality of clusters each representing a crystal direction;
an image processing module for processing the first image so that the first image is displayed in a different color for each cluster, to generate a second image; and
a rendering module for rendering the second image to a display region.

2. The crystal structure analysis apparatus of claim 1, wherein:
the EBSD data includes a plurality of angle data collected for each predetermined sized crystal unit forming the solid material, and
the clustering module performs clustering on the plurality of pixels by using the plurality of angle data.

3. The crystal structure analysis apparatus of claim 2, wherein:
the first image includes a first pixel and a second pixel,
the plurality of angle data includes first angle data corresponding to the first pixel and second angle data corresponding to the second pixel, and
the clustering module groups the first pixel and the second pixel into a same first pixel group when a difference value between the first angle data and the second angle data is equal to or less than a predetermined first threshold value.

4. The crystal structure analysis apparatus of claim 3, wherein:
the clustering module determines the first pixel group as a valid cluster when the number of pixels grouped into the first pixel group is equal to or greater than a second threshold value, and does not determine the first pixel group as a valid cluster when the number of pixels grouped into the first pixel group is less than the second threshold value.

5. The crystal structure analysis apparatus of claim 4, wherein:
the first pixel group includes a third pixel and a fourth pixel, and
when a distance value between a position of the third pixel and a position of the fourth pixel is equal to or less than a predetermined third threshold value, the clustering module groups the third pixel and the fourth pixel into the same second pixel group.

6. The crystal structure analysis apparatus of claim 5, wherein:
the clustering module determines the second pixel group as a valid cluster when the number of pixels grouped into the second pixel group is equal to or greater than a fourth threshold value, and the clustering module does not determine the second pixel group as a valid cluster when the number of pixels grouped into the second pixel group is less than the fourth threshold value.

7. The crystal structure analysis apparatus of claim 5, wherein:
the clustering module further performs clustering on pixels that are not determined to be the valid cluster.

8. The crystal structure analysis apparatus of claim 1, wherein:
the clustering module calculates an area of the plurality of clusters and assigns a number to each of the plurality of clusters in ascending or descending order according to a size of the area.

9. The crystal structure analysis apparatus of claim 8, wherein:
the rendering module renders the number assigned to each of the plurality of clusters onto the second image.

10. The crystal structure analysis apparatus of claim 1, wherein:
the color includes at least one of RGB color, HSL color, HSV color, CMYK color, and gray scale color.

11. The crystal structure analysis apparatus of claim 1, wherein:
the display region includes a first display region and a second display region, and
the rendering module renders the first image to the first display region, and
renders the second image to the second display region.

12. The crystal structure analysis apparatus of claim 1, further comprising:
a region removal module for removing a region that does not correspond to an analysis target of the crystal structure for the first image.

13. The crystal structure analysis apparatus of claim 12, wherein:
the region removal module sets a region to be removed from or maintained in the first image from a user input to the first image, and
the user input includes a mouse input or a touch input.

14. The crystal structure analysis apparatus of claim 12, wherein:
the region removal module analyzes the first image using a predetermined algorithm and sets a region to be removed from or maintained in the first image.

15. A crystal structure analysis method comprising:
acquiring Electron Backscatter Diffraction (EBSD) data for a solid material, the EBSD data including a plurality of angle data collected for each predetermined size of crystal unit forming the solid material;
generating a shape of the solid material as a first image including a plurality of pixels;
performing clustering on the plurality of pixels by using the EBSD data so that the first image includes a plurality of clusters each representing a crystal direction;
processing the first image so that the first image is displayed in a different color for each cluster, to generate a second image; and
rendering the second image to a display region.

16. The crystal structure analysis method of claim 15, wherein:
the first image includes a first pixel and a second pixel,
the plurality of angle data includes first angle data corresponding to the first pixel and second angle data corresponding to the second pixel, and
the performing of the clustering includes
grouping the first pixel and the second pixel into a same first pixel group when a difference value between the first angle data and the second angle data is equal to or less than a predetermined first threshold value.

17. The crystal structure analysis method of claim 16, wherein:
the performing of the clustering further includes
determining the first pixel group as a valid cluster when the number of pixels grouped into the first pixel group is equal to or greater than a second threshold value, and not determining the first pixel group as a valid cluster when the number of pixels grouped into the first pixel group is less than the second threshold value.

18. The crystal structure analysis method of claim 17, wherein:
the first pixel group includes a third pixel and a fourth pixel, and
the performing of the clustering further includes
grouping the third pixel and the fourth pixel into the same second pixel group when a distance value between a position of the third pixel and a position of the fourth pixel is equal to or less than a predetermined third threshold value.

19. The crystal structure analysis method of claim 18, wherein:
the performing of the clustering further includes
determining the second pixel group as a valid cluster when the number of pixels grouped into the second pixel group is equal to or greater than a fourth threshold value, and not determining the second pixel group as a valid cluster when the number of pixels grouped into the second pixel group is less than the fourth threshold value.

20. A computer-readable medium in which a program is recorded, when executed, the program causing a computer including a processor that executes a program or a command stored in a memory or a storage device to:
acquire Electron Backscatter Diffraction (EBSD) data for a solid material;
generate a shape of the solid material as a first image including a plurality of pixels;
perform clustering on the plurality of pixels by using the EBSD data so that the first image includes a plurality of clusters each representing a crystal direction;
process the first image so that the first image is displayed in a different color for each cluster, to generate a second image; and
render the second image to a display region.
